# EUROPEAN PATENT SPECIFICATION

(11) **EP 2 455 644 B1**
(45) Date of publication and mention of the grant of the patent: **29.04.2015**
(21) Application number: 10192124.5
(22) Date of filing: 22.11.2010
(51) Int. Cl.: F16K 31/08, F16K 31/40

(54) **Magnetic control valve**
Magnetsteuerventil
Vanne de contrôle magnétique

(43) Date of publication of application: 23.05.2012
(73) Proprietor: Yuan Mei Corporation, Changhua County 505 (TW)
(72) Inventor: Cheng, Chi-Han, 505, Changhua County (TW)
(74) Representative: Lang, Christian

(56) References cited:
- WO-A1-90/01651
- DE-U1- 8 205 174
- US-A- 2 942 837
- US-A- 3 424 426
- US-A- 5 497 135
- US-A1- 2007 236 315

## Description

### FIELD OF THE INVENTION

The present invention relates to a facility for controlling the turn-on state or the turn-off state of water flow, and more particularly to a technical innovation in the field of controlling the turn-on state or the turn-off state of water flow by applying a magnetic control valve.

### BACKGROUND OF THE INVENTION

According to prior arts that are similar to a technique shown in the case, including U.S. published applications 20050184261, 20100019179, 20090224191, 20080216896, U.S. patents 7296593, 6691937, 6688577, 6675826, 6619612, 5497135, 6073904, 6076550, 7637475, 5599003, 5503362, 5269333, 5145145, 4948090, 4934651, 6457697, 5738138, 5676342, 7703740, 5565747, and 5622351, the technical features shown in the foregoing prior arts utilize a valve to partition pipes and water passages. The valve is controlled by a valve rod to show an opening or closing state. The valve rod is disposed to an end of a rod body. Another end of the rod body corresponding to the end of disposing the valve rod has a flexible element. The main functionality of the flexible element is to push the rod body to allow the valve rod to seal the valve. The rod body then is driven to displace to allow the valve rod of one end to eject from the valve. In the foregoing published applications and patents, most structures are driven by magnetic control devices.

However, the defects commonly existing in the foregoing prior art are that when the valve is opened, the moved rod body moves toward a direction that is opposite to the pushing of the flexible element. A reverse damper generated by the flexible element that is compressed may cause shift phenomenon at the moving path for the rod body, resulting in non-smooth situation.

Moreover, the rod bodies utilized in the prior arts did not have magnetic function, and parts of disposing the valve are purely made of rubber. Consequently, when the valve rod disposed to an end of the rod body plugs up the valve, the pushing force generated by the flexible element is merely taken as a power source. None of any company can develop other innovate design in the present time. The conventional bottleneck needs to be break through.

Further, the foregoing published application and patents may also require many parts assembled to the whole structures to have drawbacks of higher manufacturing costs and labor costs at the installation operation.

In addition, the foregoing published application and patents must reserve higher lengths in an aspect of the structural design for controlling the valve. Consequently, the size of the magnetic control valve is extremely big and may not be reduced to achieve light weight and small sizes.

Accordingly, to overcome the foregoing shortcomings, the inventor(s) of the present invention based on years of experience in the related field to conduct extensive researches and experiments, and finally invented a magnetic control valve.

Further examples of magnetic control valves are shown in US-A-3 424 426, WO-A-90/01651, US-A-2007/0236315, US-A-5 497 135 and DE-U-82 05 174. However, there is still the need for an improved magnetic control valve.

### SUMMARY OF THE INVENTION

A primary objective of the present invention is to provide a magnetic control valve that has less parts than conventional structures and low manufacturing cost, smooth control motions of opening and closing valves, and light weight for volume without occupying spaces.

To achieve the foregoing objective, the magnetic control valve provided by the invention - which is defined by the features of claim 1 - comprises a connection pipe having a water inflow passage and a water outflow passage. A circular seat is disposed to an engaging place between an outlet end of the water inflow passage and an inlet end of the water outflow passage, wherein a bottom of the circular seat forms an external baffle ring at the outlet end of the water inflow passage, and an inner concave slot disposed to an upper end surface of the external baffle ring. An inner baffle ring is formed at the inlet end of the water outflow passage, and the external baffle ring and the inner baffle ring are disposed at the same axle core;

A rubber ring is combined with a metal plate, wherein the metal plate in the embodiment is encapsulated inside the rubber ring, and the metal plate is be made of a metal material capable of being attracted by magnetic force, and the metal plate has a central hole. A plurality of through holes is distributed to a periphery of the central hole. A valve, which is encapsulated in the central hole of the metal plate, is formed at the rubber ring. The glue body of the rubber ring is filled within each through hole to cascade the glue bodies covering the metal plate so that the metal plate is firmly combined with the rubber ring. In addition, a flexible loop blade is connected to a periphery of the rubber ring, and an external ring is connected to a periphery of the flexible loop blade. The periphery at a bottom of the rubber ring can completely seal the inlet end of the water outflow passage, and a bottom of the external ring can seal the outlet end of the water inflow passage. A convex ring is downwardly extended from an external edge at the bottom of the external ring. The convex ring can closely fit the inner concave slot of the circular seat. More than one communicating water passages are disposed to a region of the flexible loop blade.

A magnetic control switch comprises a pipe seat, an upper cover, a magnetic sucking element and a valve rod. The pipe seat has a partition to divide the pipe seat into an independently upper pipe body space having upward opening and an independently lower pipe body space having downward opening. The pipe seat has a lower containing chamber jointed with a bottom of the lower pipe body space. An external frame is downwardly extended from the external periphery of the lower containing chamber. A bottom of the external frame can closely lean against an upper end surface of the external ring, and an external portion of the external frame can closely combine with the inside of the circular seat of the connection pipe. An exterior of the pipe seat is wound by an electromagnetic coil. The covering scope of the electromagnetic coil coves the lower pipe body space and the upper pipe body space, and the electromagnetic coil is connected to a magnetic pole switch. The electromagnetic coil can be controlled by the magnetic pole switch to generate a positive pole magnetic field or a negative pole magnetic field.

The upper cover can seal an upper opening end of the upper pipe body space. The magnetic sucking element is contained inside the upper pipe body space without any movement. The magnetic sucking element is made of a material capable of being attracted by a magnetic element.

The valve rod is fit inside the lower pipe body space and can be properly displaced and regulated. A bottom of the valve rod has a valve plug capable of completely sealing the valve of the rubber ring. The valve rod can be made of a magnetic material. In the embodiment, the valve rod comprises a magnetic element, a rubber sleeve pipe and a sealing cap for encapsulating the magnetic element. The valve plug of the valve rod is disposed at the external bottom of the sealing end of the rubber sleeve pipe. The opening of the valve plug is sealed by the external cover. Accordingly, the magnetic element may not be eroded by water.

With the composition of the foregoing components, when the electromagnetic coil is controlled by the switch to generate a magnetic field mutually repulsed with a magnetic pole at an end of the valve rod and a magnetic force of the magnetic field is larger than a magnetic force generated by the valve rod sucked to the magnetic element, the valve rod comes off the attraction of the magnetic element to instantly move toward a reverse direction to allow the bottom of the valve rod leaning against the upper end surface of the rubber ring so that the valve plug completely seals the valve of the rubber ring. The sealing effect between the valve plug and the valve can be increased through the mutual magnetic attraction produced between the metal plate inside the rubber ring and the valve rod. In the meantime, after water flow enters into the lower containing chamber through the communicating water passage of the flexible loop blade of the rubber ring from the outlet end of the water inflow passage, water stopping state is shown.

Reversely, when the electromagnetic coil controlled by the switch generates a magnetic file mutually attracted with a magnetic pole at an end of the valve rod and a magnetic force of the magnetic field is larger than the magnetic force of the valve rod attracted to the metal plate, the valve rod comes off the metal plate to instantly move toward a reverse direction to allow an end of the valve rod attracting the magnetic element so that the valve plug of the valve rod completely comes off the valve of the rubber ring to allow the valve shows an opening state. Accordingly, water flow originally staying in the lower containing chamber is introduced into the inlet end of the water outflow passage via the valve of the rubber ring, thereby smoothly draining water away.

### BRIEF DESCRIPTION OF THE DRAWINGS

FIG. 1 is a decomposition drawing of a structure according to a preferred embodiment of the present invention;
FIG. 2 is an assembly drawing of a structure according to a preferred embodiment of the present invention;
FIG. 3 is a decomposition drawing of a rubber ring in the structure according to a preferred embodiment of the present invention;
FIG. 4 is a decomposition drawing of a valve rod in the structure according to a preferred embodiment of the present invention;
FIG. 5 is a three-dimensional drawing of a valve rod in the structure according to an another preferred embodiment of the present invention;
FIG. 6 is a movement drawing I of assembled cross-section form of the structure according to a preferred embodiment of the present invention;
FIG. 7 is a movement drawing II of assembled cross-section form of the structure according to a preferred embodiment of the present invention;
FIG. 8 is a movement drawing III of assembled cross-section form of the structure according to a preferred embodiment of the present invention; and
FIG. 9 is a movement drawing IV of assembled cross-section form of the structure according to a preferred embodiment of the present invention.

### DETAILED DESCRIPTION OF THE PREFERRED EMBODIMENTS

Other features and advantages of the present invention will become apparent from the following description of the invention which refers to the accompanying drawings.

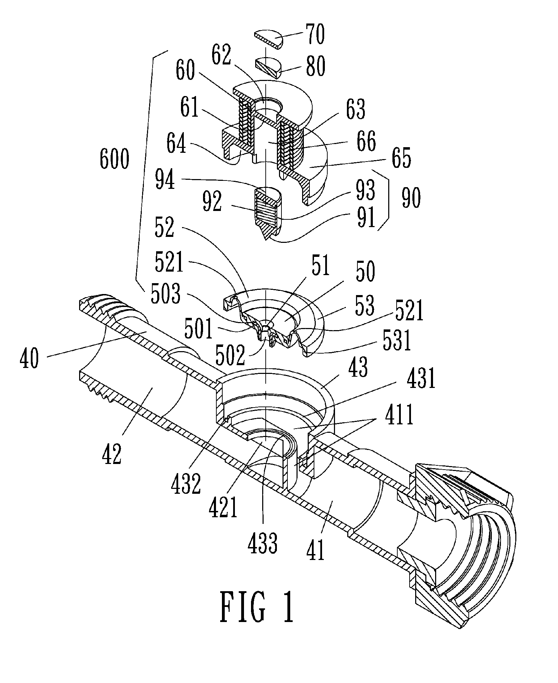

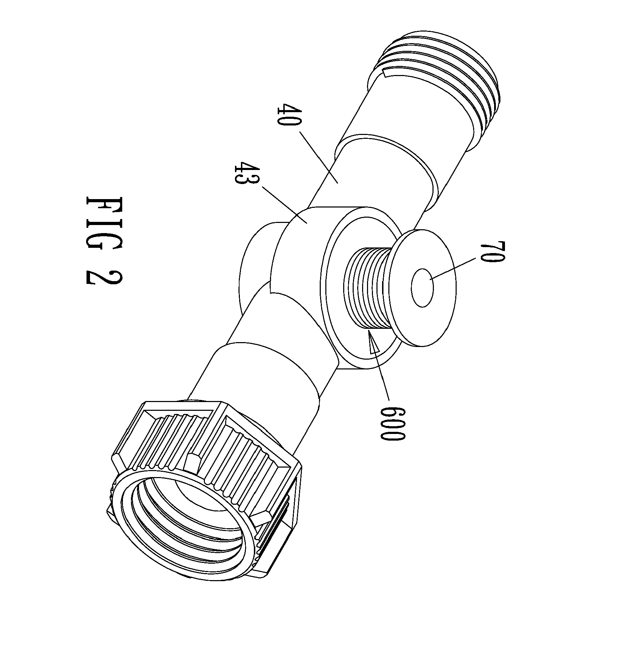

Referring FIG. 1 to FIG. 7 for a magnetic control valve in accordance with a preferred embodiment of the present invention is depicted. The magnetic control valve comprises a connection pipe 40. The connection pipe 40 has a water inflow passage 41 and a water outflow passage 42, a circular seat 43 disposed to an engaging place between an outlet end 411 of the water inflow passage 41 and an inlet end 421 of the water outflow passage 42, wherein the circular seat has an outward opening. A bottom of the circular seat 43 has an external baffle ring 431 formed at the outlet end 411 of the water inflow passage 41, and an inner concave slot 432 is disposed to an upper end surface of the external baffle ring 431. An inner baffle ring 433 is formed with respect to the inlet end 421 of the water outflow passage 42, and the external baffle ring 431 and the inner baffle ring 433 are disposed to the same axle core.

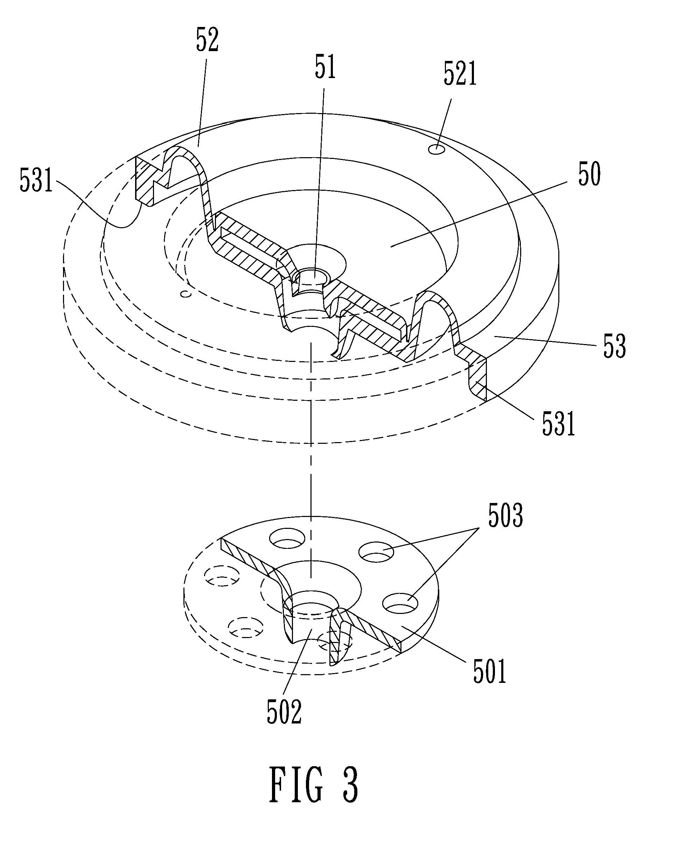

A rubber ring 50, as shown in FIG. 3, is combined with a metal plate 501, wherein the metal plate 501 is encapsulated inside the rubber ring 50, and the metal plate 501 is made of a metal material capable of being sucked by magnetic force. The metal plate 501 has a central hole 502, and a plurality of through holes 503 is distributed to a periphery of the central hole 502. The rubber ring 50 has a valve 51 encapsulated in the central hole 511 of the metal plate 501, and glue body of the rubber ring 51 fill with the inside of each through hole 503 of the metal plate 501 to cascade the bodies covering the metal plate 501 so that the metal plate 501 is firmly combined with the rubber ring 50. A flexible loop blade 52 is connected to an exterior of the rubber ring 50, and an external ring 53 is connected to a periphery of the flexible loop blade 52. A periphery of a bottom of the rubber ring 50 can completely seal the inlet end 421 of the water outflow passage 41, and a bottom of the external ring 53 can seal the outlet end 411 of the water inflow passage 41, and a convex ring 531 is downwardly extended from an external edge at the bottom of the external ring 53. The convex ring 531 can closely fit the inner concave slot 432 of the circular seat 43. In addition, more than one communicating water passages 521 are disposed to a region of the flexible loop blade 52.

A magnetic control switch 600 comprises a pipe seat 60, an upper cover 70, a magnetic sucking element 80 and a valve rod 90. The pipe seat 60 has a partition 61 to divide the pipe seat into an independently upper pipe body space 62 having upward opening and an independently lower pipe body space 63 having downward opening. The pipe seat 60 has a lower containing chamber 64 jointed with a bottom of the lower pipe body space 63. An external frame 65 is downwardly extended from the external periphery of the lower containing chamber 64. A bottom of the external frame 65 can closely lean against an upper end surface of the external ring 53 of the rubber ring 50, and an external portion of the external frame 65 can closely combine with the inside of the circular seat 43 of the connection pipe 40. In the embodiment, the manner for connecting the external frame 65 and the circular seat 43 adopts high frequency pressing or can be replaced with other conventionally equivalent techniques.

Moreover, the external portion of the pipe seat 60 is wound by an electromagnetic coil 66. The encapsulation scope of the electromagnetic coil 66 covers an upper section region of the lower pipe body space 63 and a whole region of the upper pipe body space 62, and the electromagnetic coil 66 is connected to a magnetic pole switch (not shown in the figure). The inner region of the electromagnetic pole coil 66 can be controlled by the magnetic pole switch to generate a positive pole magnetic field and a negative pole magnetic field.

The upper cover 70 can seal an upper opening end of the upper pipe body space 62. In the embodiment, the connection between the upper cover 70 and the opening end of the upper pipe body space 62 adopts high frequency pressing or can be completed by using gluing or other manners capable of closely connecting them.

The magnetic sucking element 80 is contained in the upper pipe body space 62 to form a non-moving state. The magnetic sucking element 80 is made of a material capable of being sucked by a magnetic element.

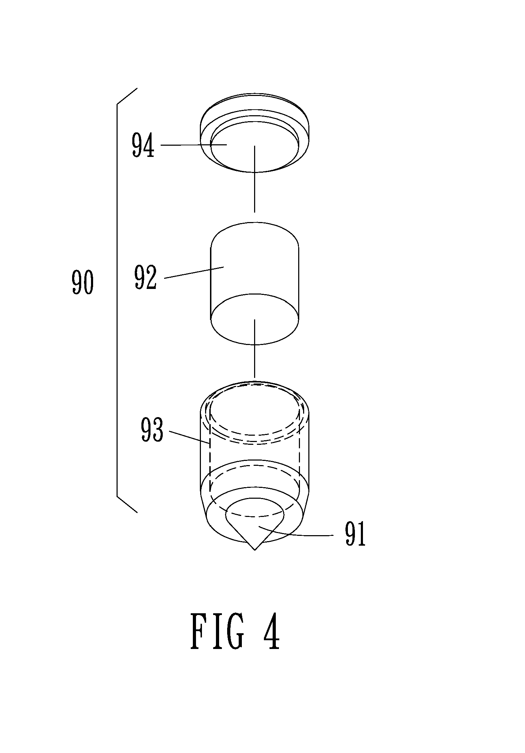

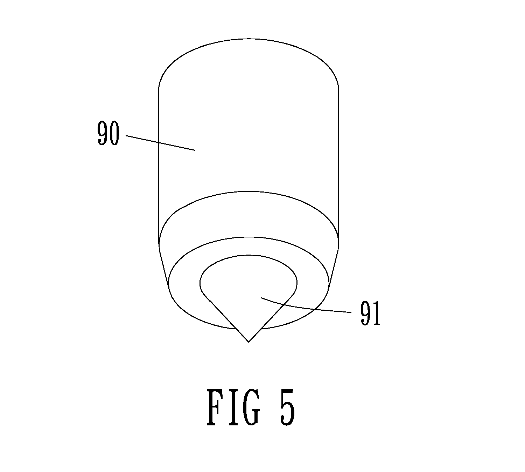

The valve rod 90 is fit inside the lower pipe body space 63 and can be properly moved and regulated. A end of the valve rod 90 has a valve plug 91 that can be regulated and moved to completely seal the valve 51 of the rubber ring 50. As shown in FIG. 5, the valve rod 90 in the embodiment can be made of a magnetic material capable of producing permanent magnetic force. Alternatively, as shown in FIG. 4, the valve rod 90, in another preferred embodiment, comprises a magnetic element 92 capable of producing permanent magnetic force and a rubber sleeve pipe 93 and a sealing cap 94 for encapsulating the magnetic element 92. In the detail depiction, the structure shown in FIG. 4 is taken as an embodiment. The valve plug 91 of the valve rod 90 is disposed at the external bottom of the sealing end of the rubber sleeve pipe 93. The opening end of the rubber sleeve pipe 93 is closed by the sealing cap 94. Accordingly, the magnetic element 92 may not be corroded by water.

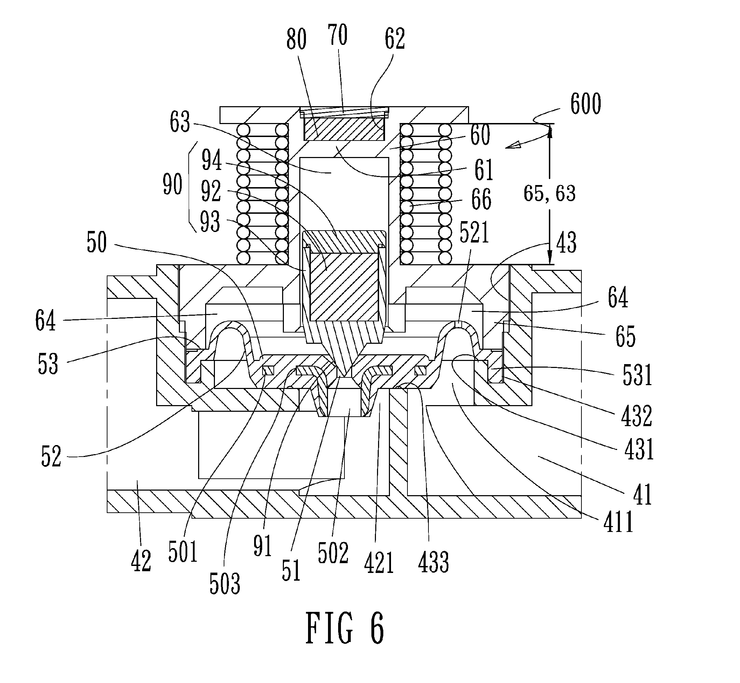

With the composition of the foregoing components, as shown in FIG. 6, when the electromagnetic coil 66 controlled by the magnetic pole switch generates a magnetic field that is mutually repulsed with a magnetic pole of an end of the valve rod 90 and when the magnetic force of the magnetic field is larger than the magnetic force generated by the valve rod 90 sucked to the magnetic sucking element 80, the valve rod 90 comes off the sucking of the magnetic sucking element 80 to instantly move toward a reverse direction to allow the bottom of the valve rod 90 leaning against the upper end of the rubber ring 50 so that the valve plug 91 at the bottom of the valve rod 90 completely seals the valve 51 of the rubber ring 50. The sealing effect between the valve plug 91 and the valve 51 can be increased through the mutual magnetic attraction produced by the magnetic force between the metal plate 501 assembled to the rubber ring 50 and the valve rod 90, thereby assuring the sealing effect.

It should be noted that after water flow enters into the lower containing chamber 64 through a communicating water passage 521 of the flexible loop blade 52 of the rubber ring 50 from the outlet end 411 of the water inflow passage 41 of the connection pipe 40, the rubber ring 50 can be pushed by water pressure to allow the bottom of the rubber ring 50 to tightly seal the inlet end 421 of the water outflow passage 42.

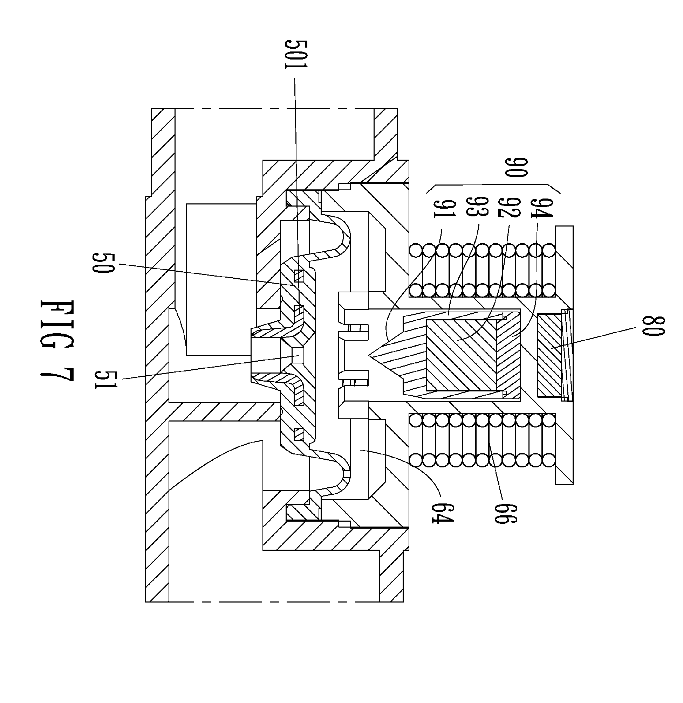

As shown in FIG. 7, when the electromagnetic coil 66 can be controlled by the magnetic pole switch to generate a magnetic field mutually attracted with a magnetic pole at an end of the valve rod 90 and when the magnetic force of the magnetic field is larger than the magnetic force generated by the valve rod 90 sucked to the metal plate 501, the valve rod 90 comes off the mutual magnetic attraction generated with the metal plate 501 to instantly move toward a reverse direction so that an end of the valve rod 90 is sucked to the magnetic sucking element 80. The valve plug 91 of the valve rod 90 completely comes off the valve 51 of the rubber ring 50 to allow the valve 51 shows an opening state. Accordingly, water flow originally staying inside the lower containing chamber 64 is continuously introduced to the inlet end 421 of the water outflow passage 42 through the valve 51 of the rubber ring 50 so as to smoothly drain away.

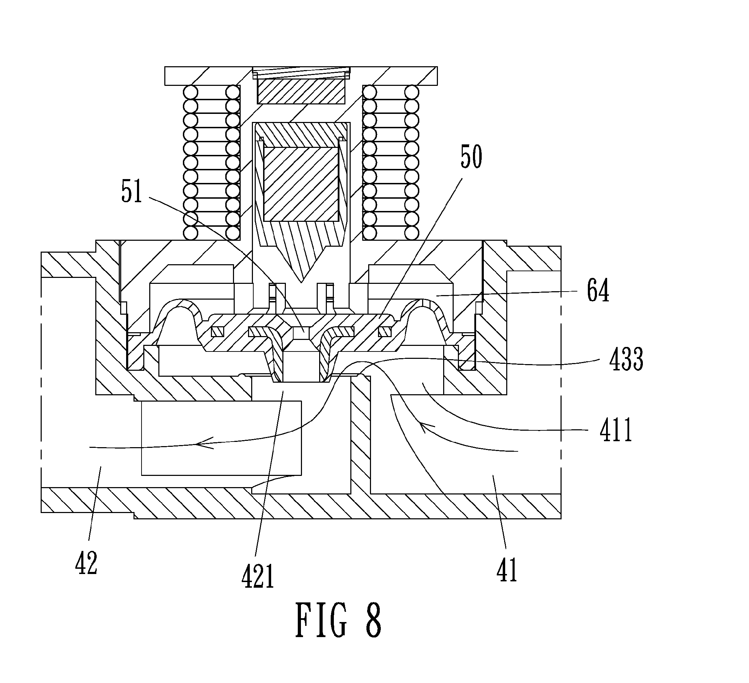

As shown in FIG. 8, after the valve 51 of the rubber ring 50 shows the opening state, water flow introduced by the outlet end 411 of the water inflow passage 41, on the one hand, flows into the water outflow passage 42 via the valve 51 from the lower containing chamber 64, and on the other hand water flow may be influenced by the difference of dozen of times where a bore diameter of the communicating water passage 521 is smaller than a bore diameter of the outlet end 411. Water flow may push the rubber ring 50 due to stronger water flow force at the outlet end 411 to expose intervals at the bottom of the rubber ring 50 and the inner baffle ring 433 so that water flow is massively introduced to the inlet end 421 of the water outflow passage 42 via the foregoing intervals.

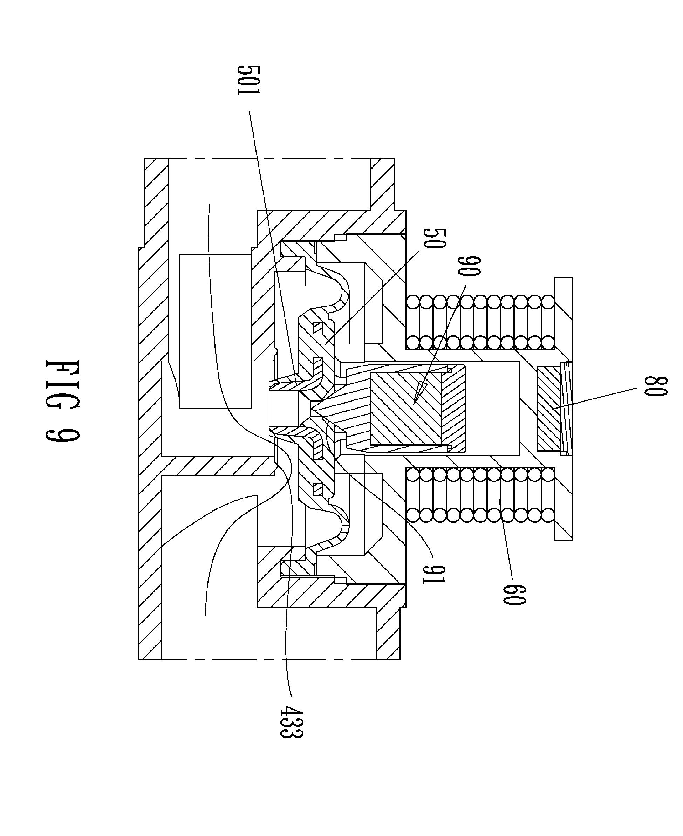

As shown in FIG. 9, when the electromagnetic coil 66 is controlled by the magnetic pole switch to generate a magnetic field mutually repulsed with a magnetic pole at an end of the valve rod 90 and when the magnetic force of the magnetic field is larger than the magnetic force generated by the valve rod 90 sucked to the magnetic sucking element 80, the valve rod 90 comes off the sucking of the magnetic sucking element 80 to instantly move toward a reverse direction. On the one hand, the bottom of the valve rod 90 leans against the upper end surface of the rubber ring 50, and the metal plate 501 can be closely attracted by the magnetic force generated from the valve rod 90 to allow the valve plug 91 to tightly seal the valve 51 of the rubber ring 50. On the other hand the rubber ring 50 synchronously and downwardly moves through the pushing effect of the valve rod 90 together with the valve rod 90 so that the bottom of the rubber ring 50 is mutually attached to the inner baffle ring 433 to form the sealing state, thereby returning to the state as shown in FIG. 6.

Although the features and advantages of the embodiments according to the preferred invention are disclosed, it is not limited to the embodiments described above, but encompasses any and all modifications and changes within the scope of the following claims.

## Claims

1. A magnetic control valve comprising: a connection pipe (40), a rubber ring (50), a magnetic control switch (600), wherein
the connection pipe (40) has a water inflow passage (41), a water outflow passage (42) and a circular seat (43) for receiving the rubber ring (50), wherein the circular seat (43) is disposed to an engaging place between an outlet end (411) of the water inflow passage and an inlet end (421) of the water outflow passage and has an outward opening;
the rubber ring (50) fits in a bottom of the circular seat (43), wherein a bottom of the rubber ring (50) seals the outlet end (411) of the water inflow passage from the inlet end (421) of the water outflow passage, and the rubber ring has a valve opening (51) in a region corresponding to the inlet end (421) of the water outflow passage (42) and communicating water passages (521) in a region corresponding to the outlet end (411) of the water inflow passage (41); the magnetic control switch (600) being assembled to the circular seat (43) and comprises a valve rod seat (60) for accommodating a valve rod (90) and a magnetic sucking element (80), wherein the valve rod seat (60) is wound by an electromagnetic coil (66), the electromagnetic coil being connected to a magnetic pole switch, an inside of the valve rod seat (60) being divided into an upper pipe body space (62) and a lower pipe body space (63), the magnetic sucking element (80) being installed to the upper pipe body space, the valve rod (90), capable of moving, being installed to the lower pipe body space, a bottom of the valve rod having a valve plug (91) to seal or open the valve opening (51) by displacing and regulating the valve plug (91), the valve rod (90) being or comprising a magnetic element carrying permanent magnetic force so that a magnetic field generated by the electromagnetic coil is regulated by the megnetic pole switch to drive the valve plug (91) of the valve rod to seal the valve opening (51) of the rubber ring, **characterized in that**,
the rubber ring (50) is combined to a metal plate (501) being capable of being
attracted by magnetic force, thereby achieving an optimum sealing effect through mutually magnetic attraction between the metal plate (501) and the valve rod (90).

2. The magnetic control valve as claimed in claim 1, wherein the metal plate (501) is a magnetic sucking element that is encapsulated inside the rubber ring.

3. The magnetic control valve as claimed in claim 1, wherein the valve rod (90) is made of a magnetic material capable of generating permanent magnetic force.

4. The magnetic control valve as claimed in claim 1, wherein the valve rod comprises a magnetic element (92) capable of producing permanent magnetic force, and a rubber sleeve pipe (93) encapsulating an external portion of the magnetic element, and a sealing cap (94) fitting an opening end of the rubber sleeve pipe, the valve plug of the valve rod being disposed at an external bottom of the sealing end of the rubber sleeve pipe.

5. The magnetic control valve as claimed in claim 1, wherein an inner concave slot (432) is disposed to an upper end surface of an external baffle ring of the circular seat (43), and a flexible loop blade (52) is connected to a periphery of the rubber ring (50), and an external ring (53) is connected to a periphery of the flexible loop blade, and a convex ring (531) is downwardly extended from an external edge at a bottom of the external ring, and the convex ring is closely fit to the inner concave slot of the circular seat.

6. The magnetic control valve as claimed in claim 1, wherein the metal plate (501) encapsulated inside the rubber ring (50) is made of a metal material attracted by a magnetic element, and the metal plate has a central hole (502), and a plurality of through holes (503) is distributed to a periphery of the central hole, and the valve opening (51) of the rubber ring (50) aligns the central hole, and glue body of the rubber ring is filled within an inside of each through hole of the metal plate to cascade the bodies covering the metal plate so that the metal plate is firmly combined with the rubber ring.

## Patentansprüche

1. Magnetsteuerventil mit einem Verbindungsrohr (40), einem Gummiring (50) und einem magnetischen Steuerschalter (600),
wobei das Verbindungsrohr (40) einen Wasserzuflussabschnitt (41), einen Wasserabflussabschnitt (42) und eine kreisrunde Aufnahme (43) zur Aufnahme des Gummirings (50) umfasst, wobei die kreisrunde Aufnahme (43) an einer Verbindungsstelle zwischen einem Auslassende (411) des Wasserzuflussabschnitts und einem Einlassende (421) des Wasserabflussabschnitts angeordnet ist und eine Öffnung nach außen aufweist, wobei der Gummiring (50) in eine Unterseite der kreisrunden Aufnahme (43) passt, wobei eine Unterseite des Gummirings (50) das Auslassende (411) des Wasserzuflussabschnitts von dem Einlassende (421) des Wasserabflussabschnitts abdichtet, und wobei der Gummiring eine Ventilöffnung (51) in einem Bereich, der dem Einlassende (421) des Wasserabflussabschnitts (42) entspricht, und verbindende Wasserleitungen (521) in einem Bereich aufweist, der dem Auslassende (411) des Wasserzuflussabschnitts (41) entspricht,
wobei der magnetische Steuerschalter (600) mit der kreisrunden Aufnahme (43) zusammengebaut ist und einen Ventilschaftsitz (60), um einen Ventilschaft (90) aufzunehmen, und ein magnetisches Saugelement (80) aufweist, wobei der Ventilschaftsitz (60) mit einer elektromagnetischen Spule (66) umwickelt ist, wobei die elektromagnetische Spule mit einem Magnetpolschalter verbunden ist, wobei ein Innenraum des Ventilschaftsitzes (60) in einen oberen Rohrkörperraum (62) und einen unteren Rohrkörperraum (63) unterteilt ist, wobei das magnetische Saugelement (80) an dem oberen Rohrkörperraum befestigt ist, wobei der Ventilschaft (90), welcher beweglich ist, an dem unteren Rohrkörperraum befestigt ist, wobei eine Unterseite des Ventilschafts einen Ventilstecker (91) aufweist, um die Ventilöffnung (51) abzudichten oder zu öffnen, indem der Ventilstecker (91) versetzt und angesteuert wird, wobei der Ventilschaft (90) ein magnetisches Element ist oder beinhaltet, welches eine permanentmagnetische Kraft ausübt, sodass ein Magnetfeld, welches durch die elektromagnetische Spule erzeugt wird, durch den Magnetpolschalter gesteuert wird, um den Ventilstecker (91) des Ventilschafts zu betätigen, um die Ventilöffnung (51) des Gummirings abzudichten, **dadurch gekennzeichnet, dass**,
der Gummiring (50) mit einer Metallplatte (501) kombiniert ist, welche von einer magnetischen Kraft angezogen werden kann, sodass eine bestmögliche Dichtungswirkung durch die gegenseitige magnetische Anziehung zwischen der Metallplatte (501) und dem Ventilschaft (90) erreicht wird.

2. Magnetsteuerventil nach Anspruch 1, wobei die Metallplatte (501) ein magnetisches Saugelement ist, das im Inneren des Gummirings eingeschlossen ist.

3. Magnetsteuerventil nach Anspruch 1, wobei der Ventilschaft (90) aus einem magnetischen Material hergestellt ist, das eine permanentmagnetische Kraft erzeugen kann.

4. Magnetsteuerventil nach Anspruch 1, wobei der Ventilschaft ein magnetisches Element (92), das eine permanentmagnetische Kraft erzeugen kann, und ein Gummimanschettenrohr (93), das einen äußeren Teil des magnetischen Elements umgibt, und eine Dichtungskappe (94) umfasst, welche auf eine Endöffnung des Gummimanschettenrohrs passt, wobei der Ventilstecker des Ventilschafts an einer äußeren Unterseite des Dichtungsendes des Gummimanschettenrohrs angeordnet ist.

5. Magnetsteuerventil nach Anspruch 1, wobei ein inneres konkaves Langloch (432) an einer oberen Stirnfläche einer äußeren Ringblende der kreisrunden Aufnahme (43) angeordnet ist, wobei eine flexible Schlaufenklinge (52) mit einem Rand des Gummirings (50) verbunden ist, wobei ein äußerer Ring (53) mit einem Rand der flexiblen Schlaufenklinge (52) verbunden ist, wobei sich ein konvexer Ring (531) von einer äußeren Kante an einer Unterseite des äußeren Rings nach unten erstreckt, und wobei der konvexe Ring eng an dem inneren konkaven Langloch der kreisrunden Aufnahme anliegt.

6. Magnetsteuerventil nach Anspruch 1, wobei die Metallplatte (501), welche im Inneren des Gummirings (50) eingeschlossen ist, aus einem metallischen Material hergestellt ist, das von einem magnetischen Element angezogen wird, wobei die Metallplatte ein Mittelloch (502) aufweist, wobei eine Vielzahl von Durchgangsbohrungen (503) um den Rand des Mittellochs verteilt ist, und wobei die Ventilöffnung (51) des Gummirings (50) mit dem Mittelloch ausgerichtet ist, und wobei ein Klebekörper des Gummirings jeweils eine Innenseite der Durchgangsbohrung der Metallplatte ausfüllt, um die Körper, die die Metallplatte bedecken, zu kaskadieren, wodurch die Metallplatte fest mit dem Gummiring verbunden ist.

## Revendications

1. Soupape de commande magnétique comprenant : un tuyau de liaison (40), un anneau en caoutchouc (50), un commutateur de commande magnétique (600),
le tuyau de liaison (40) ayant un passage d'entrée de l'eau (41), un passage de sortie de l'eau (42) et un siège circulaire (43) pour recevoir l'anneau en caoutchouc (50), le siège circulaire (43) étant disposé à un endroit qui est en prise entre une extrémité de sortie (411) du passage d'entrée de l'eau et une extrémité d'entrée (421) du passage de sortie de l'eau et ayant une ouverture vers l'extérieur,
l'anneau en caoutchouc (50) étant ajusté dans un fond du siège circulaire (43), un fond de l'anneau en caoutchouc (50) fermant de manière étanche l'extrémité de sortie (411) du passage d'entrée de l'eau à partir de l'extrémité d'entrée (421) du passage de sortie de l'eau et l'anneau en caoutchouc ayant une ouverture de soupape (51) dans une région correspondant à l'extrémité d'entrée (421) du passage de sortie de l'eau (42) et des passages d'eau communiquant (521) dans une région correspondant à l'extrémité de sortie (411) du passage d'entrée de l'eau (41),
le commutateur de commande magnétique (600) étant monté sur le siège circulaire (43) et comprenant un siège de tige de soupape (60) pour loger la tige de soupape (90) et un élément d'aspiration magnétique (80), le siège de soupape (60) étant enroulé par une bobine électromagnétique (66), la bobine électromagnétique étant reliée à un commutateur à pôle magnétique, un intérieur du siège de tige de soupape (60) étant divisé en un espace supérieur de corps de tuyau (62) et un espace inférieur de corps de tuyau (63), l'élément d'aspiration magnétique (90) étant installé sur l'espace supérieur de corps de tuyau, la tige de soupape (90), capable de se déplacer, étant installée sur l'espace inférieur de corps de tuyau, un fond de la tige de soupape ayant un clapet de soupape (91) pour fermer de manière étanche ou pour ouvrir l'ouverture de soupape (51) en déplaçant et en régulant le bouchon de soupape (91), la tige de soupape (90) étant ou comprenant un élément magnétique qui porte une force magnétique permanente si bien qu'un champ magnétique généré par la bobine électromagnétique est régulé par le commutateur de pôle magnétique pour entraîner le clapet de soupape (91) de la tige de soupape à fermer de manière étanche l'ouverture de soupape (51) de l'anneau en caoutchouc, **caractérisée en ce que**
l'anneau en caoutchouc (50) est combiné à une plaque de métal (501) qui est capable d'être attirée par une force magnétique en atteignant ainsi un effet de fermeture étanche maximum par attraction magnétique mutuelle entre la plaque de métal (501) et la tige de soupape (90).

2. Soupape à commande magnétique selon la revendication 1, la plaque de métal (501) étant un élément d'aspiration magnétique qui est encapsulé à l'intérieur de l'anneau en caoutchouc.

3. Soupape à commande magnétique selon la revendication 1, la tige de soupape (90) étant faite en un matériau magnétique capable de générer une force magnétique permanente.

4. Soupape à commande magnétique selon la revendication 1, la tige de soupape comprenant un élément magnétique (92) capable de produire une force magnétique permanente et un tuyau à manchon de caoutchouc (93) qui encapsule une portion externe de l'élément magnétique et un capuchon d'étanchéité (94) qui est ajusté sur une extrémité d'ouverture du tuyau à manchon en caoutchouc, le bouchon de soupape de la tige de soupape étant disposé sur un fond externe de l'extrémité de fermeture étanche du tuyau à manchon en caoutchouc.

5. Soupape à commande magnétique selon la revendication 1, une fente concave intérieure (432) étant disposée sur une surface d'extrémité supérieure d'un anneau séparateur externe du siège circulaire (43) et une lame à boucle flexible (52) étant reliée à une périphérie de l'anneau en caoutchouc (50) et un anneau extérieur (53) étant relié à une périphérie de la lame à boucle flexible, et un anneau convexe (531) s'étendant vers le bas à partir d'une arête externe sur un fond de l'anneau externe et l'anneau convexe étant ajusté de manière serrée dans la fente concave intérieure du siège circulaire.

6. Soupape à commande magnétique selon la revendication 1, la plaque de métal (501) encapsulée à l'intérieur de l'anneau en caoutchouc (50) étant faite en un matériau métallique attiré par un élément magnétique et la plaque de métal ayant un trou central (502) et une pluralité de trous traversants (503) étant distribuée sur une périphérie du trou central et l'ouverture de soupape (51) de l'anneau en caoutchouc (50) s'alignant sur le trou central et un corps en colle de l'anneau en caoutchouc étant rempli à l'intérieur d'un intérieur de chaque trou traversant de la plaque de métal pour relier en cascade les corps couvrant la plaque de métal si bien que la plaque de métal est combinée de manière ferme à l'anneau de caoutchouc.
